# EUROPÄISCHE PATENTSCHRIFT

(11) **EP 1 047 165 B1**
(45) Veröffentlichungstag und Bekanntmachung des Hinweises auf die Patenterteilung: **13.03.2002**
(21) Anmeldenummer: 99107861.9
(22) Anmeldetag: 21.04.1999
(51) Int. Cl.: H01T 19/00, B29C 59/12

(54) **Barrierenelektrode zur Oberflächenbehandlung von elektrisch leitenden oder nichtleitenden Materialien sowie Anordnung derartiger Barrierenelektroden**
Barrier electrodes for surface treatment of electrical conductive or non-conductie materials and arrangment of such barrier electrodes
Electrodes barrières pour le traîtement de surfaces de matériaux électriques conducteurs ou non-conducteurs ainsi que arrangement de telles électrodes barrières

(43) Veröffentlichungstag der Anmeldung: 25.10.2000
(73) Patentinhaber: Softal Electronic Erik Blumenfeld Gmbh & Co., 21107 Hamburg (DE)
(72) Erfinder: Prinz, Eckhard, Dipl.-Phys., 22929 Hamfelde (DE); Martens, Bernd, Dipl.-Ing., 21244 Buchholz (DE); Lorentz, Claus, Ing., 22393 Hamburg (DE)
(74) Vertreter: von Raffay, Vincenz, Dipl.-Ing.

(56) Entgegenhaltungen:
- EP-A- 0 381 044
- EP-A- 0 621 667
- DE-U- 9 402 370

## Beschreibung

Die Erfindung betrifft eine Barrierenelektrode nach dem Oberbegriff des Anspruches 1, sowie eine Barrierenelektrodenanordnung mit einer oder mehreren derartigen Barrierenelektroden.

In der Oberflächentechnik werden Barrierenentladungen in einer einfachen bzw. doppelten Barrierenelektrodenanordnung zur Behandlung der Oberflächen von elektrisch leitenden bzw. nicht leitenden Materialien eingesetzt. Dabei wird üblicherweise die auf Hochspannung liegende, stabförmige Barrierenelektrode zu einer Gegenelektrode angeordnet. Die Gegenelektrode ist entweder mit oder ohne dielektrische Barriere versehen. Sowohl Walzen- als auch Plattengeometrien kommen bei der Gegenelektrode zum Einsatz. Elektrisch ist die Gegenelektrode auf Erdpotential geschaltet. Das zu behandelnde Material (Substrat) liegt eng anf der geerdeten Gegenelektrode auf und bildet zu der Hochspannungselektrode einen Spalt von wenigen Millimetern, über dem die Barrierenentladung gezündet ist.

Aus dem deutschen Gebrauchsmuster 94 023 70 ist eine Elektrode für die Koronabehandlung bekannt, die aus einem Metallkern besteht, der mit einer elektrischen Umhüllung versehen ist. Der Metallkern weist Durchgangsbohrungen für die Durchleitung eines Kühlmittels auf. Eine so aufgebaute Elektrode wird parallel zur Gegenelektrode, vornehmlich einer Walze, angeordnet.

Aus der EP 0621 667 ist eine Elektrode gemäß Oberbegriff des Anspruchs 1 bekannt, die aus einem länglichen, hohlen Kupferkörper besteht, der mit einem Dielektrikum auf mindestens der Fläche, die der Gegenelektrode gegenübersteht, versehen ist. Zur Kühlung wird Flüssigkeit durch die hohle Elektrode geleitet.

Bei diesen und anderen bekannten Barrierenelektroden, sei es mit einem dielektrikumsbeschichteten Metallkern bzw. Hohlkörper oder einem dielektrischen Profil mit metallischem Kern, treten in Abhängigkeit von der angelegten Spannung an den Elektrodenflanken Gleitentladungen auf.

Je nach angelegter Spannung können die Gleitentladungen bis an die Haltekomponenten reichen und diese führen nach kurzer Zeit zu Beschädigungen, welche zum Ausfall der Anlage für die Oberflächenbehandlung führen. Des weiteren weisen die Gleitentladungen einen funkenartigen oder filamentierten Entladungscharakter mit Kanälen hoher Stromdichte auf. Infolge der hohen Stromdichte kommt es zu einer nicht erwünschten thermischen Aufheizung des Elektrodensystems und dem zu behandeInden Material. Der filamentierte Entladungscharakter kann überdies zu einer ungleichmäßigen Oberflächenbehandlung führen. Im Falle von sensitiven, meist dünnen Substraten, können auch lokale Schäden auf der Oberfläche durch thermische Überhitzung auftreten. So wird die eingespeiste elektrische Energie zum Teil ungenutzt in Wärme umgesetzt.

Bei den bekannten Barrierenelektroden treten mehr oder weniger folgende Probleme auf:
- Durch die Bauausführung treten Gleitladungen auf, die zur Zerstörung der Haltekomponenten führen.
- Gleitentladungen sind die Ursache von thermischer Belastung von Elektrode und zu behandelndem Material. Dies macht eine Kühlung der Elektrode notwendig.
- Die Beschichtung auf dem Metallträger weist mit der Zeit durch die thermische Ausdehnung Mikrorisse auf, wodurch es zum elektrischen Kurzschluß kommt, welcher zum Ausfall der Behandlungsstation und damit zum Produktionsstillstand führt.
- Eine Einspeisung von Prozeßgas ist nicht vorgesehen.

Der Erfindung liegt nun die Aufgabe zugrunde, eine Barrierenelektrode und eine entsprechende Anordnung der eingangs genannten Art zu schaffen, bei der diese Probleme nicht auftreten und insbesondere die nachteiligen Gleitentladungen vermieden werden.

Diese Aufgabe wird grundsätzlich durch das Kennzeichen des Anspruches 1 gelöst.

Erfindungsgemäß besteht die Barrierenelektrode praktisch vollständig aus dielektrischem Material in Form eines Rohres mit zwei Kanälen. Diese beiden Kanäle sind parallel zur Gegenelektrode angeordnet, wobei der der Gegenelektrode zugekehrte Kanal den Hochspannungsleiter enthält. Der der Gegenelektrode abgelegene Kanal wird von einem Temperiermedium oder einem Prozeßgas durchströmt.

Gleitentladungen können bei einer derartigen Aushildung nicht auftreten.

In vorteilhafter Weise kann die Barrierenelektrode so ausgebildet sein, wie in Anspruch 2 angegeben.

Die Entladungsfläche, die in Gebrauchslage der Gegenelektrode zugekehrt ist, ist in vorteilhafter Weise mit einer Oberflächenriffelung versehen, um die Zündung zu verbessern (Anspruch 3).

Es ist auch möglich, den Hochspannungsleiter, der in dem ersten, der Gegenelektrode zugekehrten Kanal angeordnet ist, durch eine Füllung mit einem metallischen Granulat zu bilden (Anspruch 4).

Wenn der Hochspannungsleiter als flächiges Gebilde ausgebildet ist, dann ist es von Vorteil, den verbleibenden Hohlraum mit einem dielektrischen Granulat zu füllen (Anspruch 5).

In den Ansprüchen 6 bis 9 sind verschiedene Barrierenelektrodenanordnungen unter Schutz gestellt.

Im folgenden wird die Erfindung unter Hinweis auf die Zeichnungen anhand verschiedener Ausführungsbeispiele näher erläutert.

Es zeigt:
- Fig. 1: einen schematischen Querschnitt durch eine erste Ausführungsform einer Barrierenelektrode nach der Erfindung;
- Fig. 2: einen der Fig. 1 entsprechenden Querschnitt durch eine abgewandelte Ausführungsform;
- Fig. 3: einen schematischen Querschnitt durch eine Barrierenelektrodenanordnung mit zwei nebeneinander liegenden Barrierenelektroden;
- Fig. 4: einen schematischen Querschnitt einer Barrierenelektrodenanordnung mit zwei einander gegenüberliegenden Barrierenelektroden, die grundsätzlich so aufgebaut sind, wie diejenigen nach Fig. 2;
- Fig. 5: einen schematischen Querschnitt durch eine Barrierenelektrodenanordnung mit zwei Barrierenelektroden, die einander zugekehrt sind;
- Fig. 6: einen schematischen Querschnitt durch eine Barrierenelektrodenanordnung mit zwei einen Hochspannungsleiter enthaltenden Kanälen, die durch einen Kanal zur Zuleitung von Prozeßgas getrennt sind;
- Fig. 7: einen schematischen Querschnitt durch eine Vorrichtung zur Durchführung einer elektrischen Oberflächenbehandlung mit Barrierenelektroden nach der Erfindung;
und
- Fig. 8: einen der Fig. 7 entsprechenden, schematischen Querschnitt einer anderen Ausführungsform.

Die Barrierenelektrode weist eine Haltekomponente 1 für den Grundkörper 2 aus dielektrischem Material auf. In dem rohrförmigen Grundkörper sind zwei Kanäle 3 und 4 vorgesehen, die voneinander getrennt sind und parallel zu der Gegenelektrode 7, welche als Walze oder Platte ausgeführt ist, verlaufen. Das zu behandelnde Substrat ist mit 6 bezeichnet. Die Barrierenentladung ist mit 8 gekennzeichnet.

In dem ersten Kanal 4, der der Gegenelektrode 7 zugekehrt ist, befindet sich ein Hochspannungsleiter 5 in Form eines flächigen Gebildes. Der zweite Kanal 3, der "oberhalb" des ersten Kanals 4 liegt, ist von einem Temperiermedium durchströmt.

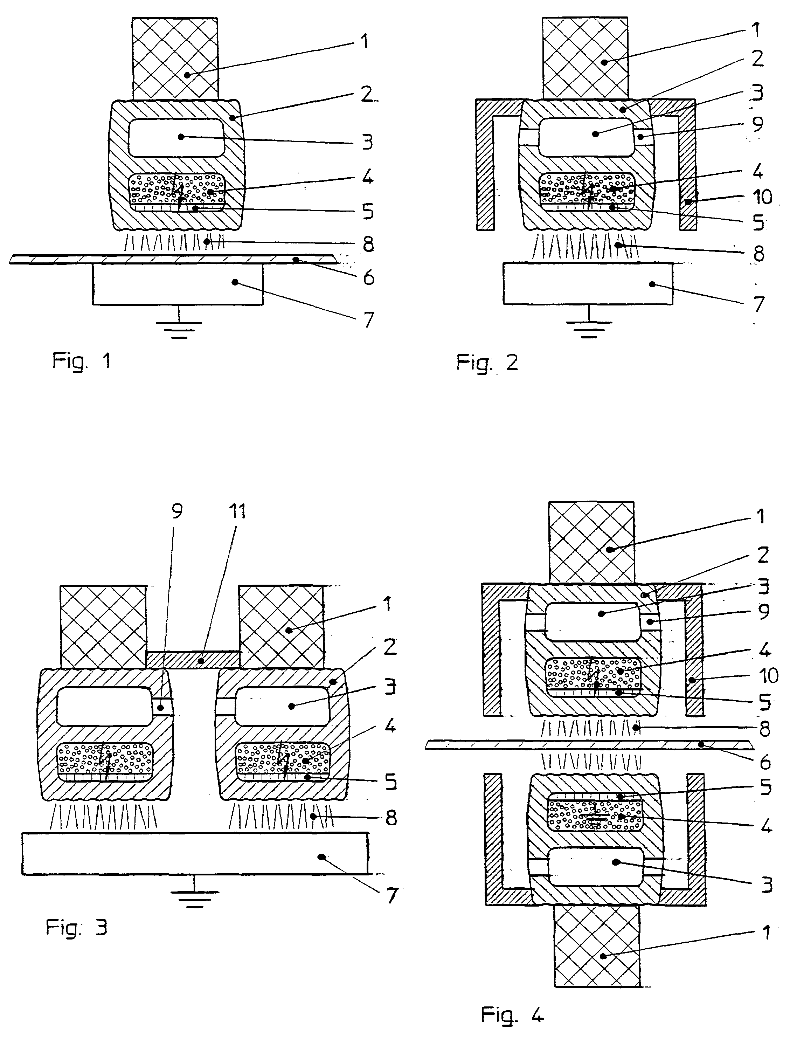

Die Ausführungsform nach Fig. 2 ist zusätzlich mit Öffnungen 9 versehen, die mit Hilfe von Abdeckungen 10 Prozeßgas aus dem zweiten Kanal 3 in den Bereich der Entladung 8 lenken.

Bei der Ausführungsform nach Fig. 3 sind zwei Barrierenelektroden nebeneinander angeordnet. Über Öffnungen 9 wird Prozeßgas aus dem zweiten Kanal 3 in den Bereich der Entladungen 8 geleitet. Eine Abdeckung ist mit 11 bezeichnet.

Bei der Ausführungsform nach Fig. 4 liegt auf jeder Seite des zu behandelnden Materials 6 eine Barrierenelektrode, wie sie in Fig. 2 dargestellt ist. Hierdurch ist eine Behandlung beider Materialoberflächen gleichzeitig möglich.

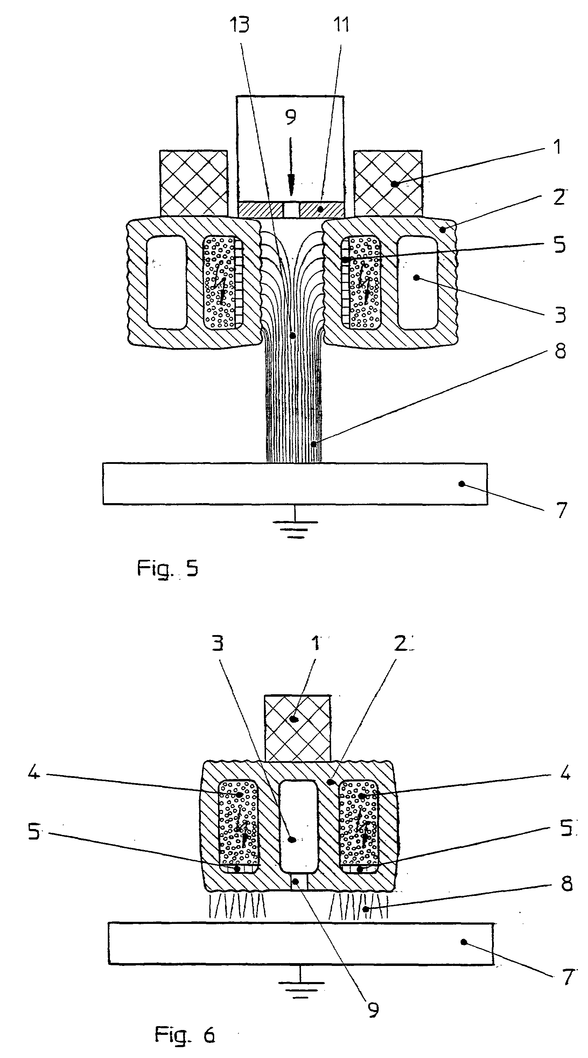

Bei der Ausführungsform nach Fig. 5 sind zwei Barrienelektroden so angeordnet, daß die Hochspannungsleiter einander zugekehrt sind, und in einem Abstand von 0,5 - 10 mm zur geerdeten Gegenelektrode 7 angeordnet sind. In dieser Anordnung wird über den Gasverteiler 9 zwischen die Barrierenelektroden Trägergas mit Prozeßgas injiziert, wobei diese durch die Entladung 13 aktiviert werden. Bei dieser Entladung handelt es sich um eine gleitentladungskontrollierte Barrierenentladung 8 zur Gegenelektrode.

Bei der Ausführungsform nach Fig. 6 sind drei Kanäle in dem Grundkörper 2 aus dielektrischem Material vorgesehen, wobei aber praktisch zwei Kanäle 4 einen ersten Kanal mit einem Hochspannungsleiter 5 bilden. In der Mitte befindet sich der zweite Kanal 3 zur Zuleitung von Prozeßgas, das bei 9 austritt.

Grundsätzlich ist es so, daß der Hochspannungsleiter durch ein flächiges Gebilde aus einem geeigneten Metall gebildet ist, wobei der verbleibende Hohlraum evtl. mit einem Dielektrikum ausgefüllt ist. Der Hochspannungsleiter kann aber auch durch ein metallisches Granulat gebildet sein, das dann den gesamten Hohlraum ausfüllt.

Durch die Trennung der Funktionen auf verschiedene Kanäle wird erreicht, daß bei vollständiger metallischer Füllung des ersten Kanals mit einem Leiter die auftretenden Gleitentladungen auf keinen Fall die Haltekomponenten beschädigen können. Die Gleitentladungen sind auf den Bereich des Kanals begrenzt, der den Hochspannungsleiter enthält. Der zweite Kanal des Grundkörpers aus dielektrischem Material dient der Beschickung mit einem vornehmlich gasförmigen Medium für die Temperierung bzw. der Einspeisung eines Prozeßgases.

Im Falle der Kühlung ist es möglich, die Elektrodenleistung auf bis zu ca.3 kW/m zu erhöhen. Üblich sind bei bekannten Barrierenelektroden zurzeit 1 kW/m. Durch die Kühlung bei Verwendung von z.B. Druckluft, kann die Elektrodentemperatur im Vergleich zu ungekühlten Systemen um ca. 50°C abgesenkt werden. Zwischen der Entladungsfläche und der Haltefläche stellt sich durch die Kühlung eine hohe Temperaturdifferenz von 30 bis 100°C ein. Dieses führt zur Reduzierung der thermischen Belastung von Haltekomponenten und Elektrode und somit zu einer hohen Betriebssicherheit. Ein weiterer großer Vorteil der direkten Elektrodenkühlung ist die Steigerung der spezifischen Elektrodenleistung. Diese ist bei herkömmlichen Elektroden auf etwa 1 kW/m begrenzt. Die Kühlung erlaubt eine Anhebung auf ca. 3 kW/m, was die Anzahl an Elektroden bei hoher Gesamtleistung reduziert. Auch lassen sich mit den kühleren Elektroden thermisch sensitive Materialien mit einer hohen Entladungsdosis ohne Beschädigungen, z.B. bei Berührung, behandeln.

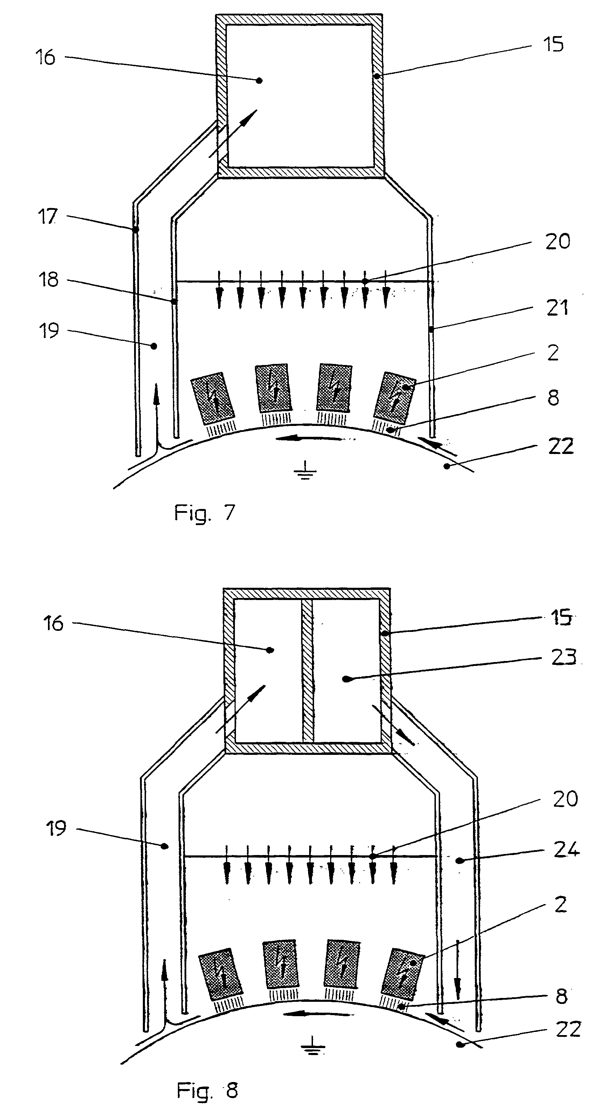

In den Fig. 7 und 8 sind zwei Ausführungsformen dargestellt, bei denen Barrierenelektroden oder Barrierenelektrodenanordnungen nach den Fig. 1 bis 6 in eine entsprechende Vorrichtung eingebaut sind.

Bei der Ausführungsform nach Fig. 7 dient ein Trägerprofil 15 als Absaugkanal 16. Dieser Absaugkanal 16 ist über einen Kanal 19, der durch die Seitenwände 17 und 18 abgebildet wird, mit dem Austrittsbereich der Anordnung Elektrode - Gegenelektrode verbunden. Eine Seitenwand im Einlaufbereich ist mit 21 bezeichnet. Bei 20 wird Kühlluft zugeführt. Die Gegenelektrode ist mit 22 bezeichnet und als entsprechend umlaufende Walzenelektrode, über die das Material geführt wird, ausgebildet.

Bei der Ausführungsform nach Fig. 8 ist zusätzlich zu dem Absaugsystem 16 und 19 in dem Trägerprofil 15 ein Kanalsystem 23 und 24 für Gas vorgesehen, das mit dem Einlaufbereich verbunden ist, und der Gasinjektion in diesem Bereich dient. Zusätzlich kann über den Kanal 20 ein reaktives Gasgemisch zugeführt werden..

Es ist ohne weiteres erkennbar, daß die eigentliche Oberflächenbehandlung durch vier - bis zu zehn sind möglich - Barrierenelektrodenanordnungen 2 durchgeführt wird, die so ausgebildet sein können, wie vorstehend beschrieben und in den Fig. 1 bis 6 gezeigt.

## Patentansprüche

1. Barrierenelektrode zur Oberflächenbehandlung von elektrisch leitenden oder nicht leitenden Materialien, mit mittelfrequenten, elektrischen Entladungen, ausgebildet als Rohr mit zwei parallel zueinander in Längsrichtung verlaufenden Kanälen, von denen einer zur Zuführung eines Temperiermediums oder eines Prozeßgases dient, **dadurch gekennzeichnet, daß** das Rohr (2) aus dielektrischem Material besteht, und
daß der in Gebrauchslage der Gegenelektrode (7) zugekehrte Kanal (4), der nicht der Zuführung des Temperiermediums oder des Prozeßgases dient, mit einem Hochspannungsleiter (5) versehen ist.

2. Barrierenelektrode nach Anspruch 1, **dadurch gekennzeichnet, daß** der Hochspannungsleiter (5) als flächiges Gebilde parallel zu und auf der in Gebrauchslage der Gegenelektrode (7) zugekehrten Innenfläche des ersten Kanals (4) vorgesehen ist.

3. Barrierenelektrode nach Anspruch 1 oder 2, dadurch gekenn-zeichnet, daß die Entladungsfläche, die in Gebrauchslage der Gegenelektrode (7) zugekehrt ist, eine Riffelung aufweist..

4. Barrierenelektrode nach Anspruch 1, **dadurch gekennzeichnet, daß** der Hochspannungsleiter durch eine Füllung mit einem metallisches Granulat gebildet ist.

5. Barrierenelektrode nach Anspruch 2 oder 3, **dadurch gekennzeichnet, daß** der von dem als flächiges Gebilde ausgebildeten Hochspannungsleiter (5) nicht ausgefüllte Hohlraum mit einem dielektrischen Granulat gefüllt ist.

6. Barrierenelektrode nach einem oder mehreren der vorstehenden Ansprüche, **dadurch gekennzeichnet, daß** das Rohr (2) aus dielektrischem Material eine Breite und Höhe von 10 bis 50 mm aufweist, und daß der Abstand zur Gegenelektrode (7) 0,5 bis 5 mm beträgt.

7. Barrierenelektrodenanordnung mit einer Barrierenelektrode nach einem oder mehreren der vorstehenden Ansprüche, **dadurch gekennzeichnet, daß** mindestens zwei Barrierenelektroden auf einer Seite der zu behandelnden Oberfläche nebeneinander derart angeordnet sind, daß die ersten Kanäle (4) mit dem Hochspannungsleiter (5) der zu behandelnden Oberfläche zugekehrt sind (Fig. 3).

8. Barrierenelektrodenanordnung mit einer Barrierenelektrode nach einem oder mehreren der Ansprüche 1 bis 5, **dadurch gekennzeichnet, daß** mindestens zwei Barrierenelektroden auf einer Seite der zu behandeInden Oberfläche nebeneinander derart angeordnet sind, daß die ersten Kanäle (4) mit den Hochspannungsleitern (5) einander zugekehrt sind, und zwischen sich einen Spalt (13) zum Zuführen von Prozeßgas in Richtung auf die zu behandelnde Oberfläche freilassen (Fig. 5).

9. Barrierenelektrodenanordnung mit einer Barrierenelektrode nach einem oder mehreren der Ansprüche 1 bis 5, **dadurch gekennzeichnet, daß** der erste Kanal (4), in dem die Hochspannungsleiter. (5) verlaufen, in zwei Kanäle aufgeteilt sind, die neben dem zweiten Kanal (3) angeordnet sind (Fig. 6).

## Claims

1. Barrier electrode for the surface treatment of electrically conductive or non-conductive materials, with medium frequency electrical discharges, constructed as a tube with two parallel, longitudinally directed channels, whereof one is used for the supply of a thermostatting medium or a process gas, **characterized in that** the tube (2) is made from dielectric material and that the channel (4) facing the counterelectrode (7) in the use position and which is not used for the supply of the thermostatting medium or process gas, is provided with a high voltage conductor (5).

2. Barrier electrode according to claim 1, **characterized in that** the high voltage conductor (5) is in the form of a flat structure parallel to and on the inner surface of the first channel (4) facing the counterelectrode (7) in the use position.

3. Barrier electrode according to claim 1 or 2, **characterized in that** the discharge surface facing the counterelectrode (7) in the use position is provided with a corrugation.

4. Barrier electrode according to claim 1, **characterized in that** the high voltage conductor is formed by a metallic granulate filling.

5. Barrier electrode according to claim 2 or 3, **characterized in that** the cavity not filled with the high voltage conductor (5) constructed as a flat structure is filled with a dielectric granulate.

6. Barrier electrode according to one or more of the preceding claims, **characterized in that** the dielectric material tube (2) has a width and height of 10 to 50 mm and that the spacing from the counterelectrode (7) is 0.5 to 5 mm.

7. Barrier electrode arrangement with a barrier electrode according to one or more of the preceding claims, **characterized in that** at least two barrier electrodes are juxtaposed on one side of the surface to be treated in such a way that the first channels (4) with the high voltage conductor (5) face the surface to be treated (fig. 3).

8. Barrier electrode arrangement with a barrier electrode according to one or more of the claims 1 to 5, **characterized in that** at least two barrier electrodes are juxtaposed on one side of the surface to be treated in such a way that the first channels (4) with the high voltage conductors (5) face one another and between them leave free a gap (13) for supplying process gas in the direction of the surface to be treated (fig. 5).

9. Barrier electrode arrangement with a barrier electrode according to one or more of the claims 1 to 5, **characterized in that** the first channel (4) containing the high voltage conductors (5) is subdivided into two channels, which are positioned alongside the second channel (3) (fig. 6).

## Revendications

1. Electrode-barrière pour traitement de surface de matériaux conducteurs ou non conducteurs d'électricité avec des décharges électriques à moyenne fréquence, réalisée sous forme de tube comportant deux canaux s'étendant parallèlement l'un à l'autre dans la direction longitudinale, dont l'un sert à l'amenée d'un fluide de régulation ou d'un gaz de processus,
**caractérisée en ce que** le tube (2) est constitué d'un matériau diélectrique, et
**en ce que** le canal (4), tourné vers la contre-électrode (7) lorsqu'on est en position d'utilisation, qui ne sert pas l'alimentation en fluide de régulation ou de gaz de processus, est muni d'un conducteur à haute tension (5).

2. Electrode-barrière selon la revendication 1, **caractérisée en ce que** le conducteur à haute tension (5) est prévu sous la forme de structure plate parallèle à et placé sur la surface intérieure du premier canal (4) qui est tournée vers la contre-électrode (7) en position d'utilisation.

3. Electrode-barrière selon la revendication 1 ou 2, **caractérisée en ce que** la surface de décharge, qui, en position d'utilisation, est tournée vers la contre-électrode (7), présente une striation.

4. Electrode-barrière selon la revendication 1, **caractérisée en ce que** le conducteur à haute tension est formé par un remplissage par un granulat métallique.

5. Electrode-barrière selon la revendication 2 ou 3 **caractérisée en ce que** l'espace creux, qui n'est pas rempli par le conducteur à haute tension (5) réalisé sous la forme de structure plate, est rempli d'un granulat diélectrique.

6. Electrode-barrière selon l'une ou plusieurs des revendications précédentes, **caractérisée en ce que** le tube (2) en matériau diélectrique a une largeur et une hauteur de 10 à 50 mm, et **en ce que** l'espacement à la contre-électrode (7) est de 0,5 à 5 mm.

7. Agencement d'électrode-barrière avec une électrode-barrière selon l'une ou plusieurs des revendications précédentes, **caractérisé en ce qu'**au moins deux électrodes-barrières sont disposées l'une à côté de l'autre sur un côté de la surface à traiter, de manière que les premiers canaux (4), munis de conducteurs à haute tension (5), soient tournés vers la surface à traiter (figure 3).

8. Agencement d'électrode-barrière avec une électrode-barrière selon l'une ou plusieurs des revendications 1 à 5, **caractérisé en ce qu'**au moins deux électrodes-barrières sont disposées l'une à côté de l'autre sur un côté de la surface à traiter, de manière que les premiers canaux (4) munis des conducteurs à haute tension (5) soient tournés les uns vers les autres et qu'entre eux soit laissé libre un interstice (13) pour l'amenée de gaz de processus dans la direction de la surface à traiter (figure 5).

9. Agencement d'électrode-barrière avec une électrode-barrière selon l'une ou plusieurs des revendications 1 à 5, **caractérisé en ce que** les premiers canaux (4), dans lequel les conducteurs à haute tension (5) s'étendent, sont subdivisés en deux canaux qui sont disposés à côté du deuxième canal (3) (figure 6).
